# EUROPÄISCHE PATENTSCHRIFT

(11) **EP 0 753 678 B1**
(45) Veröffentlichungstag und Bekanntmachung des Hinweises auf die Patenterteilung: **23.04.2003**
(21) Anmeldenummer: 96111487.3
(22) Anmeldetag: 17.07.1996
(51) Int. Cl.: F16C 33/04, F16C 17/02

(54) **Gleitlager für eine Welle**
Sliding-contact bearing for a shaft
Palier à contact lisse pour un arbre

(43) Veröffentlichungstag der Anmeldung: 15.01.1997
(73) Patentinhaber: Maag Pump Systems Textron AG, 8023 Zürich (CH)
(72) Erfinder: Blume, Peter, Dr. sc. techn., 8057 Zürich (CH)
(74) Vertreter: Troesch Scheidegger Werner AG

(56) Entgegenhaltungen:
- WO-A-80/02447
- AT-B- 107 213
- DD-A- 66 534
- FR-A- 1 301 718
- FR-A- 2 215 110
- GB-A- 1 380 947

## Beschreibung

Die vorliegende Erfindung betrifft ein Gleitlager nach dem Oberbegriff des Patentanspruchs 1 sowie eine Zahnradpumpe nach Anspruch 4 mit einem derartigen Gleitlager.

Gleitlager werden beispielsweise dazu verwendet, Antriebswellen oder dgl. aufzunehmen, um diese örtlich zu fixieren. Dabei nimmt das Lager die auf die Welle wirkenden Kräfte auf, und zwar insbesondere diejenigen, die radial auf die Welle wirken.

Bekanntermassen besitzen Gleitlager ein an die Betriebsbedingungen angepasstes Spiel. Dies ist notwendig, damit ein geeignetes und ein dem gewählten Spiel entsprechendes Schmiermedium in das Gleitlager eindringen kann. Bei Schmiermedien mit neben dem reinen Fliessverhalten erhöhtem elastischem Anteil kann der Zutritt des Schmiermediums in den Lagerspalt schwierig sein, d.h., es kann nur unter Anwendung eines zusätzlichen Drucks genügend Schmiermedium in den Lagerspalt gelangen. Insbesondere bei Gleitlagern für Zahnradpumpen, bei denen oftmals das Fördermedium gleichzeitig als Schmiermedium verwendet wird, erweist sich der Zutritt des Schmiermediums zum Lagerspalt als sehr schwierig, zumal es sich beim Fördermedium meist um Flüssigkeiten mit relativ hoher Viskosität handelt. Zwar wird bei der Verwendung von hochviskosen Schmiermedien das Spiel der Welle im Gleitlager entsprechend grösser gewählt, doch wird die Belastung eines Lagerendes oft übermässig hoch, so dass bei höheren Wellenbelastungen - trotz genügender Lagertragfähigkeit des Gleitlagers - Platzmangel in Folge einer Wellenschrägstellung im Lager auftreten kann, was zu erhöhten Reibungsverlusten und im Extremfall sogar zu einem Verkeilen der Welle führen kann.

Aus der AT-107 213 ist ein Gleitlager nach dem Oberbegriff des Anspruchs 1 bekannt, bei dem die Lagerenden zur Vermeidung von erhöhten Reibungsverlusten bei Schiefstellung der Welle eine symmetrische Fase aufweisen. Zwar ist hierdurch die Schmierung der Welle verbessert, doch gleichzeitig auch die die Welle tragende Lagerfläche verkleinert.

Der vorliegenden Erfindung liegt daher die Aufgabe zugrunde, ein Gleitlager anzugeben, bei dem die Gefahr eines Verkeilens der Welle vermindert ist und/oder bei dem eine ausreichende Schmierung gewährleistet ist, wobei gleichzeitig die die Welle tragenden Lagerflächen des Gleitlagers bezüglich einer Hauptlastrichtung optimiert sind.

Diese Aufgabe wird durch das im Patentanspruch 1 angegebenen gleitlager gelöst. Vorteilhafte Ausgestaltungen des Gleitlagers sowie eine Zahnradpumpe mit einem derartigen Gleitlager sind in weiteren Ansprüchen angegeben.

Die Erfindung weist folgende Vorteile auf: Indem zumindest ein Lagerende eines Gleitlagers zur Lagerbohrung hin asymmetrisch gefast ist, wird die wellendurchbiegungsbedingte Berührungsgefahr herabgesetzt bzw. es wird erreicht, dass genügend Schmiermittel dem Gleitlager zugeführt wird. Insbesondere dann, wenn das Gleitlager durch eine radiale Belastung der im Gleitlager gelagerten Welle im wesentlichen in eine Richtung erfolgt, erweist sich eine bzw. vorzugsweise zwei Fasen in den Lagerenden besonders vorteilhaft. Dabei ist vorzugsweise die Fase auf der Nichtlastseite grösser ausgebildet als diejenige auf der Lastseite. Hierdurch verkürzt sich die Körperkante auf der Nichtlastseite im Längsschnitt, so dass die wellenbedingte Berührungsgefahr auf der Nichtlastseite herabgesetzt bzw. die Versorgung des Gleitlagers mit Schmiermedium erleichtert wird, ohne die die Lagerlast im wesentlichen tragende Lagerlänge auf der Lastseite nennenswert zu reduzieren. Damit ist die Gefahr von erhöhten Reibungsverlusten im Gleitlager sowie die Gefahr des Verkeilens der Welle im Gleitlager erheblich vermindert.

Die Erfindung wird nachfolgend anhand von Zeichnungen beispielsweise näher erläutert. Dabei zeigen
- Fig. 1: eine schematische Darstellung eines eine Welle aufnehmenden Gleitlagers im Längsschnitt,
- Fig. 2: die Anordnung gemäss Fig. 1, bei der die Welle belastet ist, wobei die durch die Last hervorgerufene Wellendurchbiegung zur Verdeutlichung übertrieben gross dargestellt ist,
- Fig. 3: ein erfindungsgemässes Gleitlager und
- Fig. 4: einen Schnitt A-A durch das in Fig. 3 dargestellte erfindungsgemässe Gleitlager.

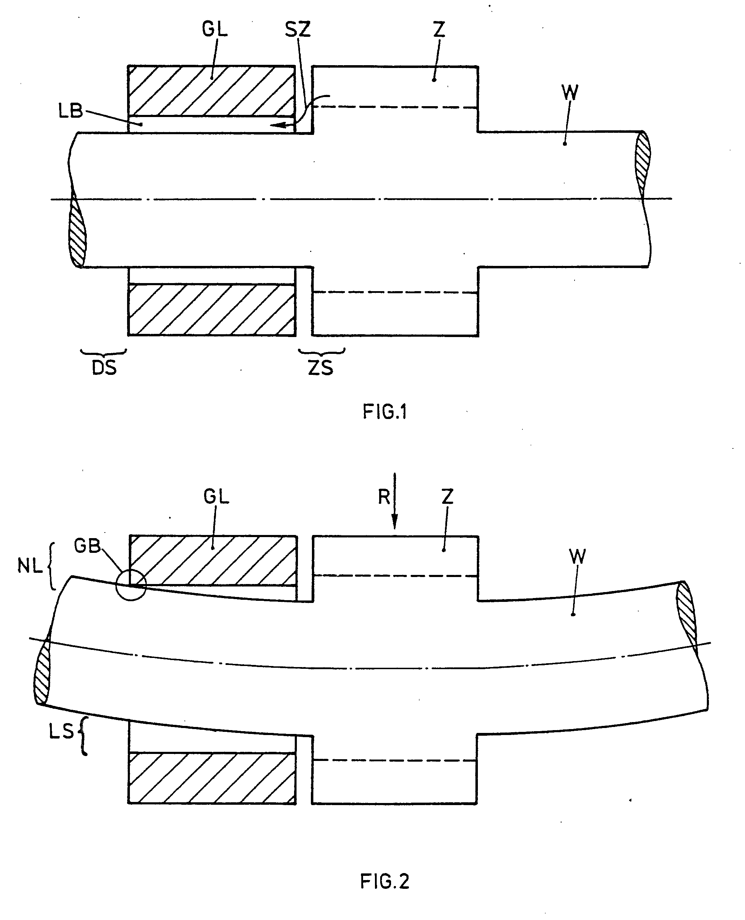

Fig. 1 zeigt in einer schematischen Darstellung einen Teil einer Zahnradpumpe, der aus einem Zahnrad Z, einer Welle W und einem Gleitlager GL mit einer Bohrung LB besteht, wobei das Zahnrad Z fest mit der Welle W verbunden ist und die Welle W in die Bohrung LB des Gleitlagers GL eingreift. Dabei ist die Welle W so weit in das Gleitlager GL eingeschoben, dass das auf der Welle W montierte Zahnrad Z an das Gleitlager GL angrenzt. Aus diesem Grund wird im folgenden diese Seite des Gleitlagers GL als Zahnradseite ZS bezeichnet. Am der Zahnradseite ZS gegenüberliegenden Lagerende ist vorzugsweise eine Dichtung vorgesehen (in Fig. 1 nicht dargestellt). Entsprechend wird diese Seite des Gleitlagers GL als Dichtungsseite DS bezeichnet.

Fig. 2 zeigt die Anordnung gemäss Fig. 1, jedoch wirkt nun eine Radialkraft R auf das Zahnrad Z, was zu einer entsprechenden Wellendurchbiegung führt, die in Fig. 2 in stark übertriebenen Masse dargestellt ist. Durch die ortsfeste Radialkraft R wird die Welle W im wesentlichen in eine vorgegebene Richtung gedrückt, was zu einer Exzentrizität der Welle W in Bezug auf das Gleitlager GL führt. Durch die Wellendurchbiegung, hervorgerufen durch die Radialkraft R, entsteht im Gleitlager GL eine Lastseite LS und eine Nichtlastseite NL, wobei unter dem Begriff "Lastseite LS" derjenige Bereich des Gleitlagers GL verstanden wird, der durch die Einwirkung der Radialkraft R stärker belastet wird, und unter dem Begriff "Nichtlastseite NL" derjenige Bereich, der der Lastseite LS gegenüberliegt.

In Fig. 2, besonders wegen der übertriebenen Darstellung der Wellendurchbiegung, ist deutlich sichtbar, dass zunächst auf der Nichtlastseite NL - und zwar auf der Dichtungsseite DS - ein Gefahrenbereich GB entsteht - in Fig. 2 mit einem Kreis gekennzeichnet -, in dem eine Berührung zwischen der Welle W und dem Gleitlager GL durch die Einwirkung der Radialkraft R auf die Welle W möglich ist. Eine Berührung dieser beiden Teile hat eine erhöhte Abnützung, im Extremfall sogar eine Zerstörung der Welle W bzw. des Gleitlagers GL zur Folge und muss daher vermieden werden. Erfindungsgemäss wird das Gleitlager GL mit einer Fase versehen, wie im folgenden ausführlich erläutert wird.

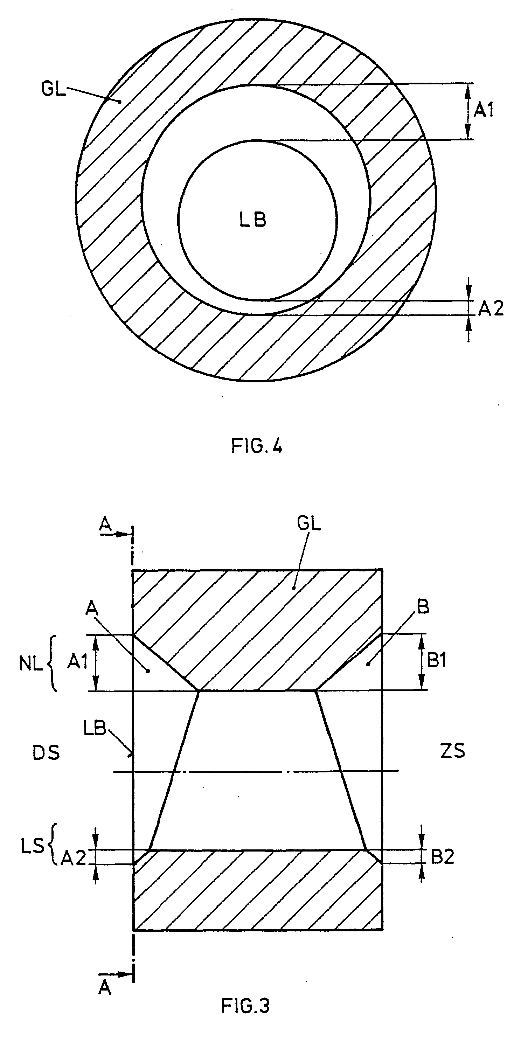

Fig. 3 zeigt ein erfindungsgemässes Gleitlager GL, das auf der Dichtungsseite DS mit einer asymmetrischen Fase A ausgebildet ist, die in Fig. 3 entsprechend der in Fig. 2 dargestellten Wellendurchbiegung in übertriebenem Masse dargestellt ist, wobei die Fase A auf der Nichtlastseite NL stärker ausgebildet ist als auf der Lastseite LS. Wird dieses erfindungsgemässe Gleitlager GL in der Anordnung gemäss Fig. 2 verwendet, so wird die Gefahr einer Berührung zwischen Welle W und Gleitlager GL wesentlich verringert.

Bei einer Zahnradpumpe, bei der das Fördermedium gleichzeitig als Schmiermedium verwendet wird, das über den Förderraum der Zahnradpumpe in das Gleitlager GL fliesst (in Fig. 1 ist die Fliessrichtung des Schmiermediums mit SZ bezeichnet), ist das Nachfliessen von Schmiermedium aus Platzgründen im Gleitlager GL und wegen den in diesem herrschenden Druckverhältnissen oftmals ungenügend, was zu zusätzlich hohen Abnützungen führen kann.

Daher wird vorgeschlagen, das Lagerende auf der Zahnradseite ZS mit einer Fase B zu versehen. Entsteht die Belastung der Welle W bzw. des Gleitlagers GL aufgrund einer im wesentlichen aus der gleichen Richtung auf die Welle W wirkenden Radialkraft R, so ist die Lagerbohrung LB derart zu fasen, dass im wesentlichen auf einer Nichtlastseite NL eine grössere Fase B1 als auf der Lastseite LS vorgesehen ist. Hierdurch verkürzt sich die Körperkante auf der Nichtlastseite NL im Längsschnitt, so dass das Schmiermedium besser in das Gleitlager GL fliessen kann, womit die Schmierung der Welle W verbessert ist.

Eine bevorzugte Ausführungsform der Erfindung besteht darin, dass das Gleitlager GL sowohl dichtungsseitig als auch zahnradseitig eine Fase aufweist, wie dies in Fig. 3 mit den Fasen A und B dargestellt ist. Dadurch wird sowohl der Schmiermediumzutritt zum Gleitlager GL gewährleistet als auch die Berührung von Gleitlager GL und Welle W vermieden, ohne dass eine nennenswerte Verkürzung der tragenden Lagerlänge in Kauf genommen werden muss.

Fig. 4 zeigt einen Schnitt A-A durch das in Fig. 3 dargestellte Gleitlager GL im Bereich des dichtungsseitigen Lagerendes. Im Gleitlager GL ist als konzentrische Bohrung die Lagerbohrung LB ersichtlich, die jedoch wegen der Fase A1 bzw. A2 nicht bis ans zahnradseitige Lagerende reicht bzw. wegen der Fase A ausgeweitet ist. In Fig. 4 ist zudem eine in Umfangsrichtung stetig verteilte Fase, die von der grössten Fase A1 in die kleinste Fase A2 übergeht, dargestellt.

Die in Umfangsrichtung stetig verteilte Fase am Lagerende des Gleitlagers GL kann dadurch erhalten werden, dass die Mittellinie des Gleitlagers GL einen von Null verschiedenen Winkel mit der Rotationsachse eines das Gleitlager GL fixierenden Drehfutters einer Drehmaschine einschliesst.

Denkbar ist in einer weiteren Ausführungsform der Erfindung auch, dass das Gleitlager GL lediglich auf der Nichtlastseite NL mit einer Fase A bzw. B versehen ist. In Bezug auf Fig. 4 bedeutet dies, dass die Fase A2 bzw. B2 auf der Lastseite LS nicht vorhanden sind, weil die Fase A bzw. B von der auf der Nichtlastseite NL maximal vorkommenden Fase A1 bzw. B1 in Umfangrichtung der Lagerbohrung LB ausläuft bevor die Lastseite LS erreicht ist.

Ausgehend vom erfindungsgemässen Gleitlager GL ist es für den Fachmann eine naheliegende Ausgestaltung, dass die Fasen A und B bzw. A1 und B1 bzw. A2 und B2 von unterschiedlicher Dimension sein können und nicht etwa gleich gross gewählt werden müssen.

## Patentansprüche

1. Gleitlager (GL) mit einer Lagerbohrung (LB) zum Aufnehmen einer Welle (W), auf die zumindest zeitweise eine Radialkraft (R) wirkt, wobei zumindest ein Lagerende des Gleitlagers (GL) mindestens eine Fase (A, B) aufweist zur Verhinderung einer Berührung zwischen der Welle (W) und dem Gleitlager (GL) unter Betriebsbedingungen und/oder zur Erleichterung der Versorgung des Gleitlagers (GL) mit Schmiermedium unter Betriebsbedingungen, **dadurch gekennzeichnet, dass** das Gleitlager (GL) am Lagerende
- einander diametral gegenüberliegende Fasen aufweist, wobei die Fase (A1, B1) auf einer Seite (N, L) grösser ausgebildet ist als die fase (A2, B2) auf der diametral gegenüberliegende Seite (LS), oder
- lediglich auf einer Seite mit einer Fase versehen ist, und auf der diametral gegenüberliegenden Seite keine Fase vorhanden ist, oder
- mit einer asymmetrischen Fase (A, B) ausgebildet ist, die auf einer Seite (NL) stärker ansgebildet ist als auf der diametral gegenüberliegenden Seite (LS).

2. Gleitlager (GL) nach Anspruch 1, **dadurch gekennzeichnet, dass** der ganze Umfang der Lagerbohrung (LB) mindestens eines Lagerendes eine Fase (A, B) aufweist.

3. Gleitlager (GL) nach Anspruch 1, **dadurch gekennzeichnet, dass** zumindest ein Teil des Umfangs der Lagerbohrung (LB) mindestens eines Lagerendes keine Fase (A, B) aufweist.

4. Zahnradpumpe mit mindestens einem Gleitlager (GL) nach einem der Ansprüche 1 bis 3, wobei das Gleitlager (GL) eine ein Zahnrad (Z) tragende Welle (W) aufnimmt.

5. Zahnradpumpe nach Anspruch 4, **dadurch gekennzeichnet, dass** bei Belastung der Welle (W) durch eine Radialkraft (R), die im wesentlichen in eine vorgegebene Richtung auf die Welle (W) wirkt, im Gleitlager (GL) eine Lastseite (LS) und eine Nichtlastseite (NL) entstehen, wobei die Fase (A1, B1) auf der Nichtlastseite (NL) grösser ausgebildet ist als die Fase (A2, B2) auf der Lastseite (LS).

6. Zahnradpumpe nach Anspruch 5, **dadurch gekennzeichnet, dass** Fasenübergänge von der grössten Fase (A1, B1) auf der Nichtlastseite (NL) zur kleinsten Fase (A2, B2) auf der Lastseite (LS) in Umfangsrichtung stetig ausgebildet sind.

7. Zahnradpumpe nach einem der Ansprüche 4 bis 6, **dadurch gekennzeichnet, dass** die Fasen (A, B) zahnradseitig und/oder dichtungsseitig vorgesehen sind.

## Claims

1. Slide bearing (GL) having a bearing bore (LB) for receiving a shaft (W) which is at least temporarily affected by a radial force (R), wherein at least one bearing end of the slide bearing (GL) has at least one chamfer (A, B) for preventing, under operating conditions, a contact between the shaft (W) and the slide bearing (GL) and/or for facilitating, under operating conditions, the supplying of the slide bearing (GL) with lubricating medium, **characterized in that**
- the slide bearing (GL) contains, at the bearing end, chamfers lying diametrically opposite to each other, the chamfer (A1, B1) on one side (N, L) being larger than the chamfer (A2, B2) lying on the diametrically opposite side, or
- a chamfer is only provided on one side and having no chamfer on the diametrically opposing side, or
- an asymmetric chamfer (A, B) is developed having a larger construction than on the diametrically opposing side (L, S).

2. Slide bearing (GL) according to claim 1, **characterized in that** the full circumference of the bearing bore (LB) of at least one bearing end has a chamfer (A, B).

3. Slide bearing (GL) according to claim 1, **characterized in that** at least a part of the circumference of the bearing bore (LB) of at least one bearing end has no chamfer (A, B).

4. Gear pump with at least a slide bearing (GL) according to one of the claims 1 to 3, wherein the slide bearing (GL) supports a shaft (W) holding a gear wheel (Z).

5. Gear pump according to claim 4, **characterized in that**, when the shaft (W) is stressed by a radial force (R) which acts essentially in a predetermined direction upon the shaft (W), a stressed side (LS) and an unstressed side (NL) are created in the slide bearing (GL), the chamfer (A1, B1) on the unstressed side (NL) having a larger construction than the chamfer (A2, B2) on the stressed side (LS).

6. Gear pump according to claim 5, **characterized in that** chamfer transitions from the largest chamfer (A1, B1) on the unstressed side (NL) to the smallest chamfer (A2, B2) on the stressed side (LS) have a continuous construction in the circumferential direction.

7. Gear pump according to one of the claims 4 to 6, **characterized in that** the chamfers (A, B) are provided on the gear wheel side and/or on the seal side.

## Revendications

1. Palier lisse (GL) avec un alésage du roulement (LB) destiné à recevoir un arbre (W), une force radiale (R) agissant au moins temporairement sur ledit alésage et au moins une extrémité du palier lisse (GL) présentant au moins un chanfrein (A, B) pour éviter sous conditions de marche un contact entre l'arbre (W) et le palier lisse (GL) et/ou pour faciliter, sous conditions de marche, l'alimentation du palier lisse (GL) avec un lubrifiant, **caractérisé en ce que** à son extrémité ledit palier lisse (GL)
- présente deux chanfreins diamétralement opposés, le chanfrein (A1, B1) sur un côté (N, L) étant plus grand que le chanfrein (A2, B2) du côté diamétralement opposé (LS) ou
- ne présente un chanfrein que sur un côté et ne présente pas de chanfrein sur le côté diamétralement opposé, ou
- est muni d'un chanfrein asymétrique (A, B) qui est développé plus fortement un côté (N, L) que sur le côté diamétralement opposé (LS).

2. Palier lisse (GL) selon la revendication 1, **caractérisé en ce que** la circonférence entière de l'alésage du roulement (LB) à au moins une extrémité du palier présente un chanfrein (A, B).

3. Palier lisse (GL) selon la revendication 1, **caractérisé en ce qu'**au moins l'une des extrémités du palier ne présente sur au moins une partie de la circonférence de l'alésage du roulement (LB) pas de chanfrein (A, B).

4. Pompe à engrenages avec au moins un palier lisse (GL) selon l'une des revendications 1 à 3, ledit palier lisse recevant un arbre (W) portant un engrenage (Z).

5. Pompe à engrenages selon la revendication 4, **caractérisé en ce que** lors de la charge de l'arbre (W) par une force radiale(R) qui agit essentiellement dans une direction prédéterminée sur l'arbre (W) se forme dans le palier lisse (GL) un côté de charge (LS) et un côté non de charge (NL), le chanfrein (A1, B1) du côté non de charge (NL) étant développé plus fortement que le chanfrein (A2, B2) du côté de charge (LS).

6. Pompe à engrenages selon la revendication 5, **caractérisé en ce que** les raccordements des chanfreins entre le chanfrein le plus grand (A1, B1) du côté non de charge (NL) et le chanfrein le plus petit (A2, B2) du côté de charge (LS) sont continus en direction circonférentielle.

7. Pompe à engrenages selon l'une des revendications 4 à 6, **caractérisée en ce que** les chanfreins (A, B) sont prévus du côté de l'engrenage et/ou du côté des joints d'étanchéité.
